# FASCICULE DE BREVET EUROPEEN

(11) **EP 3 047 737 B1**
(45) Date de publication et mention de la délivrance du brevet: **14.03.2018**
(21) Numéro de dépôt: 16152172.9
(22) Date de dépôt: 21.01.2016
(51) Int. Cl.: A23N 15/04, A23N 15/08

(54) **MACHINE AUTOMATIQUE POUR LA COUPE DE RADICELLES SOUS UN BULBE D'UNE PLANTE, COMPRENANT UNE SURFACE DE GUIDAGE AJUSTANT LA HAUTEUR DE COUPE**
AUTOMATISCHE MASCHINE ZUM ABSCHNEIDEN DER FEINWURZELN UNTER DER ZWIEBEL EINER PFLANZE, EINSCHLIESSLICH FÜHRUNGSFLÄCHE ZUR ANPASSUNG DER SCHNITTHÖHE
AUTOMATIC MACHINE FOR CUTTING ROOTLETS UNDER A BULB OF A PLANT, COMPRISING A GUIDE SURFACE FOR ADJUSTING THE CUTTING HEIGHT

(30) Priorité: 23.01.2015 FR 1550530
(43) Date de publication de la demande: 27.07.2016
(73) Titulaire: Quaak, Denis Abraham, 89110 La Ferté Loupière (FR)
(72) Inventeur: Quaak, Denis Abraham, 89110 La Ferté Loupière (FR)
(74) Mandataire: Aquinov

(56) Documents cités:
- FR-A1- 2 667 484
- FR-A5- 2 055 942
- US-A- 3 302 727
- US-A- 3 402 748

## Description

La présente invention concerne une machine automatique pour la coupe de radicelles sous un bulbe d'une plante, ainsi qu'un procédé de coupe mettant en oeuvre une telle machine.

Certaines plantes, comme les radis notamment, comportent une racine comprenant un bulbe présentant en dessous des radicelles s'enfonçant dans la terre afin de rechercher l'eau et les éléments nutritifs. Le feuillage, appelé aussi fane, pousse au-dessus du bulbe qui est enterré juste en dessous du niveau du sol.

Un type de machine connu pour récolter et botteler les radis cultivés suivant des lignes disposées longitudinalement, présenté notamment par le document EP-A1-0744120, comporte une lame horizontale glissant dans la terre sous les radis pour les soulever, les bulbes étant ensuite engagés entre deux courroies parallèles motorisées pour les faire remonter dans la machine.

Les radis sont ensuite retournés pour mettre les feuilles vers le bas, puis regroupés pour former en les liant des bottes permettant le transport et la vente, tout en gardant de chaque côté les fanes et les radicelles.

Toutefois pour certains marchés on veut couper le feuillage et les radicelles après la récolte. Il est connu pour cela d'utiliser une machine comprenant un système de coupe disposé au-dessus ou en-dessous des courroies parallèles, pour couper les radicelles ou le feuillage de bulbes entraînés dans un défilement longitudinal par ces courroies. Le document FR-2667484 divulgue une telle machine. Les bulbes ayant des hauteurs variées, une coupe des radicelles à une hauteur prédéfinie entraîne des défauts par une coupe trop haute éliminant une partie du bulbe, ou trop basse en laissant une partie de cette radicelle. On a alors des pertes de matière, et un aspect visuel qui n'est pas bon.

La présente invention a notamment pour but d'éviter ces inconvénients de la technique antérieure.

Elle propose à cet effet une machine automatique pour la coupe de radicelles en dessous de bulbes formant la racine d'une plante, cette machine comprenant au moins un moyen d'entraînement longitudinal vers une direction arrière d'une rangée de bulbes, les radicelles étant tournées vers le bas, cette machine étant remarquable en ce qu'elle comporte au moins un tambour de coupe disposé en-dessous des moyens d'entraînement et une surface de guidage commençant en amont des tambours de coupe, qui vient vers l'arrière s'ajuster au-dessus de ces tambours en se rapprochant des courroies, cette surface comprenant au moins une fente longitudinale partant en amont des tambours de coupe, comportant une largeur laissant passer les radicelles et retenant au-dessus les bulbes.

Un avantage de cette machine automatique est qu'elle effectue un ajustement de la base des bulbes venant en appui sur la surface de guidage et ne passant pas dans les fentes, ce qui permet une coupe constante de la radicelle à la même hauteur juste en dessous de cette surface. On obtient de manière rapide et efficace un produit de qualité constante comprenant une bonne présentation.

La machine automatique de coupe selon l'invention peut comporter de plus une ou plusieurs des caractéristiques suivantes, qui peuvent être combinées entre elles.

Avantageusement, les tambours de coupe sont rotatif suivant un axe transversal et comportent des petits disques recevant dans l'espace entre eux des couteaux de coupe parallèles à l'axe transversal, le rebord coupant de ces couteaux étant ajusté sensiblement sur le diamètre extérieur de ces disques. Ces disques permettent un maintien efficace des couteaux.

Avantageusement, les fentes longitudinales de la surface de guidage sont positionnées au-dessus des espaces entre les petits disques.

En particulier la surface de guidage peut comporter sous chaque moyen d'entraînement longitudinal trois fentes longitudinales séparées par des fines lamelles, le tambour de coupe en-dessous comprenant quatre petits disques séparant les trois espaces correspondants. Avec ces trois fentes on a une largeur totale assurant malgré une dispersion de positionnement latéral des radicelles, l'entrée dans une des fentes des radicelles.

Avantageusement, le tambour de coupe est encadré latéralement par deux grands disques comprenant un diamètre extérieur qui est supérieur à ce tambour. Ces grands disques constituent un guidage latéral des bulbes.

Avantageusement, chaque fente extérieure d'un ensemble de fentes pour un même tambour de coupe, comporte sur son côté extérieur une échancrure laissant passer un grand disque. Avantageusement, la surface de guidage est formée dans une tôle découpée, qui est cintrée pour présenter une section transversale constante formant une courbure régulière s'abaissant vers l'avant. On obtient ainsi de manière économique une surface rigide. Avantageusement, la machine automatique comporte des cylindres remplissant l'espace axial entre les tambours de coupe, qui présentent sensiblement le même diamètre que ces tambours. On a ainsi une continuité du volume extérieur autour de l'arbre transversal, assurant une protection.

Avantageusement, l'arbre transversal est directement lié à l'arbre d'un moteur l'entraînant, pour tourner à la même vitesse que lui. La vitesse du cylindre de coupe est ainsi élevée.

En particulier la machine automatique peut comporter une lame tendue formant une boucle fermée, comprenant une partie droite horizontale passant au-dessus de l'ensemble des moyens d'entraînement, prévue pour couper les feuilles des plantes. La coupe des feuilles est ainsi faite automatiquement en même temps que la coupe des radicelles.

Selon un mode de réalisation, la machine automatique comporte trois tambours de coupe disposés sur l'arbre transversal, recevant chacun une rangée de plantes.

Avantageusement, la machine automatique comporte au moins deux courroies fermées présentant deux longueurs parallèles formant un moyen d'entraînement, entre lesquelles une rangée de bulbes est serrée et entraînée longitudinalement vers la direction arrière. L'invention a aussi pour objet un procédé de coupe avec une machine automatique, de radicelles en dessous de bulbes formant des racines de plantes, comprenant les étapes suivantes, les bulbes sont introduits en avant d'un moyen d'entraînement longitudinal vers une direction arrière, les radicelles étant tournées vers le bas, puis les radicelles sont insérées dans des fentes longitudinales d'une surface de guidage commençant en amont d'un tambour de coupe disposé en-dessous du moyen d'entraînement, le bulbe glissant au-dessus de cette surface, puis les radicelles sont coupées par le tambour de coupe en dessous de cette surface. D'autres caractéristiques et avantages ressortiront de la description qui va suivre de l'invention, description donnée à titre d'exemple uniquement, en regard des dessins annexés sur lesquels :
- les figures 1 et 2 présentent une machine automatique selon l'invention, vue en perspective respectivement de l'avant et du côté droit ;
- la figure 3 est une vue de face de cette machine ;
- la figure 4 est une vue du côté droit de cette machine ;
- les figures 5 et 6 sont des vues de tambours de coupe de cette machine, présentés respectivement suivant le plan de coupe transversal V-V et longitudinal VI-VI ;
- la figure 7 est une demie-vue partielle en coupe axiale d'un tambour de coupe ; et
- la figure 8 est une vue partielle de dessus du capot de guidage couvrant les tambours de coupe.

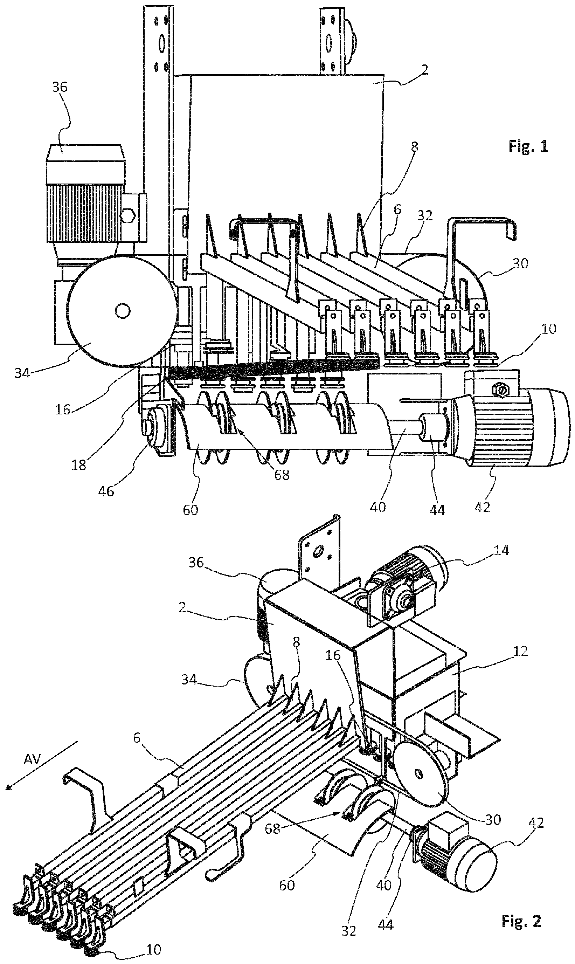

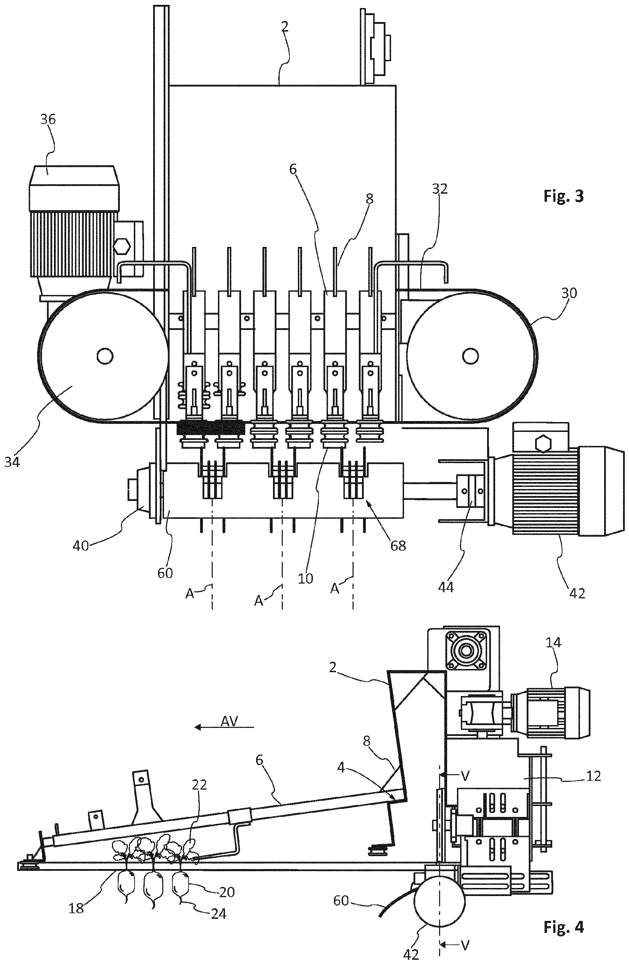

Les figures 1, 2, 3 et 4 présentent une machine automatique de coupe de radicelles, prévue en particulier pour des radis, comprenant un capot 2 formé dans une tôle présentant des plis suivant la direction transversale, qui comporte une face avant sensiblement verticale tournée vers le côté avant indiqué par la flèche notée « AV ».

La face avant du capot 2 présente une marche de petite largeur 4, sensiblement au tiers de la hauteur, supportant l'extrémité arrière de six barres parallèles 6 de section carrée, qui sont légèrement inclinées vers le bas en partant vers l'avant. La fixation arrière de chaque barre 6 sur le capot 2 est renforcée par un triangle de tôle 8 soudé sur le dessus.

L'extrémité avant de chaque barre 6 supporte par une équerre une poulie libre d'axe vertical 10, comprenant une gorge présentant une section en « V ».

La face arrière du capot 2 est fixée sur un caisson arrière en tôle 12 recevant au-dessus un motoréducteur d'avance 14, comprenant un axe de sortie vertical qui entraîne six axes verticaux parallèles recevant chacun à leur extrémité inférieure une poulie arrière motorisée 16 présentant une gorge similaire.

Une courroie sans fin 18 de section trapézoïdale est tendue entre chaque couple de poulie libre 10 et motorisée 16, qui sont alignées longitudinalement. Des moyens de tension des courroies 18 sont prévus.

Les six courroies 18 forment trois paires motorisées deux par deux, chaque paire comprenant ses courroies tournant en sens opposé de manière à présenter dans l'axe longitudinal de déplacement A entre les deux tubes 6 les supportant, deux dos plats opposés de serrage de ces courroies pressés l'un contre l'autre, qui avancent à la même vitesse vers l'arrière.

La machine automatique reçoit sur chaque axe de déplacement A une rangée de plantes comprenant les bulbes 20 serrés entre les deux courroies 18.

On obtient alors par un entraînement de la motorisation d'avance 14, un déplacement régulier des bulbes 20 suivant trois axes parallèles A, présentant le feuillage 22 dépassant au-dessus des courroies 18, et la radicelle 24 en dessous.

En variante, le feuillage 22 des radis est serré entre les deux courroies 18.

Le caisson arrière 12 supporte du côté gauche une poulie 34 motorisée par un motoréducteur 36, qui est alignée sur une deuxième poulie libre 30 disposée de l'autre côté. Les poulies 30, 34 présentant un axe longitudinal, reçoivent une lame tendue 32 formant une boucle fermée comprenant une partie droite horizontale passant juste au-dessus de l'ensemble des courroies 18, un peu avant leurs extrémités arrière. Cette lame 32 permet d'obtenir une meilleure découpe que des disques rotatifs.

Le caisson arrière 12 supporte aligné en-dessous de la lame fermée 32, un arbre transversal 40 supporté et entraîné à son extrémité droite directement par un moteur électrique 42, sans réducteur de vitesse pour tourner à la même vitesse que lui, par l'intermédiaire d'un joint d'accouplement 44 compensant les défauts d'alignement.

En variante les différentes motorisations de la machine de coupe comprenant le motoréducteur 36 et le moteur 42, pourraient utiliser une autre énergie que l'électricité, notamment une énergie hydraulique, ou pneumatique qui a pour avantage de ne pas être polluante.

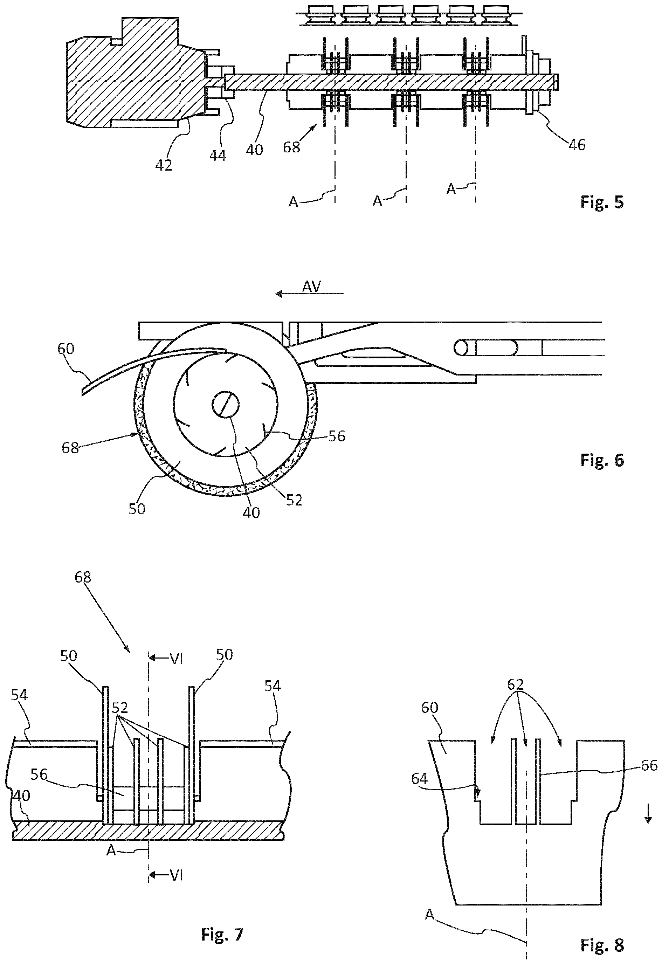

Les figures 5, 6, 7 et 8 présentent l'arbre transversal 40 supporté du côté gauche par un palier 46 fixé au caisson arrière 12.

L'arbre transversal 40 reçoit trois tambours de coupe 68 alignés chacun sur un axe de déplacement des racines A, qui sont symétriques par rapport à cet axe. Chaque tambour de coupe 68 comporte quatre petits disques 52 formant axialement trois espaces égaux, puis deux grands disques latéraux 50 accolés aux côtés extérieurs des petits disques externes.

Le contour extérieur des grands disques latéraux 50 est ajusté un peu en dessous des courroies 18.

Chaque espace entre deux petits disques 52 reçoit six couteaux transversaux 56 légèrement inclinés par rapport à la direction tangente, comprenant quand ils sont en position supérieure un rebord coupant vers l'arrière qui vient affleurer le diamètre extérieur de ces disques, ce qui forme l'enveloppe du tambour de coupe 68.

L'arbre transversal 40 supporte des cylindres 54 présentant le même diamètre que les petits disques 52, fermant l'espace entre deux tambours de coupe 68, ou l'espace situé à l'extérieur des tambours d'extrémité.

Un guide transversal 60 formé dans une tôle, constitue un capot comprenant sur le dessus une surface de guidage comportant un profil constant transversalement, présentant une extrémité arrière ajustée de manière tangente au-dessus des tambours de coupe 68, et une partie avant formant un galbe régulier de l'avant vers l'arrière et incliné vers l'avant.

En variante le guide 60 peut être formé dans une autre matière, comprenant par exemple une matière métallique ou plastique, qui est moulée ou injectée. Il peut être formé aussi à partir d'une grille ou de câbles.

Au-dessous des moyens d'entrainement, le guide 60 est très faiblement espacé des tambours de coupe 68 et des petits disques 52.

Le guide 60 forme une surface de guidage et comporte au niveau de chaque tambour de coupe 68 trois fentes longitudinales 62 séparées par deux lamelles fines 66, les fentes 62 étant positionnées au-dessus des trois espaces disposés entre les petits disques 52. Les deux fentes longitudinales extérieures 62 comportent vers l'arrière sur le côté latéral extérieur, un décrochement 64 permettant de passer le grand disque latéral 50 se trouvant de ce côté. Les fentes longitudinales 62 partant du côté arrière du guide 60, se prolongent vers l'avant nettement au-delà des grands disques latéraux 50, de manière à présenter des extrémités avant qui se trouvent en suivant la courbure avant de ce guide, à une hauteur plus grande par rapport aux courroies 18. L'extrémité avant des fentes longitudinales 62 se trouve ainsi assez basse pour recevoir la pointe des radicelles 24 quand la plante avance, et la guider latéralement le long d'une des fentes dans laquelle il s'engage.

On a ensuite quand la plante avance un guidage en hauteur du bulbe 20 qui glisse sur la surface du guide 60 sans rentrer dans les fentes 62, ce qui dispose la base de ce bulbe à une hauteur calibrée quand il se présente au-dessus du tambour de coupe 68.

La plante arrivant au niveau du tambour de coupe 68, on a simultanément au-dessus des courroies 18 une coupe des feuilles 22 par la lame horizontale 32, et en-dessous du bulbe 20 une coupe par les couteaux transversaux 56 juste en dessous de la surface du guide 60, tournant à grande vitesse pour favoriser la netteté de cette coupe, à une hauteur calibrée par rapport à la base de ce bulbe.

On notera qu'après le guidage des radicelles 24 dans les fentes 62, les bulbes 20 arrivant près de la coupe sont guidés sur les côtés à leur tour entre les deux grands disques latéraux 50, ce qui garantit le passage des radicelles 24 au-dessus du tambour de coupe 68 remplissant l'espace entre ces deux disques latéraux.

Peu après ces coupes les bulbes 20 arrivent au bout des courroies 18, et sont relâchés par ces courroies puis récupérés.

On réalise ainsi de manière simple et efficace une coupe du feuillage 22, ainsi qu'une coupe nette à grande vitesse des radicelles 24 à une hauteur constante par rapport aux bulbes 20, ce qui garantit la qualité de cette coupe.

On peut en particulier installer la machine suivant l'invention sur une machine roulante comprenant en amont un système de récolte des lignes cultivées dans les champs, de manière à récupérer automatiquement les radis récoltés de chaque ligne par un moyen d'entraînement se trouvant aligné derrière, et à les couper en continu juste après.

## Revendications

1. Machine automatique pour la coupe de radicelles (24) en dessous de bulbes (20) formant la racine d'une plante, cette machine comprenant au moins un moyen d'entraînement longitudinal (18) vers une direction arrière d'une rangée de bulbes, les radicelles étant tournées vers le bas, **caractérisée en ce qu'**elle comporte au moins un tambour de coupe (68) disposé en-dessous des moyens d'entraînement (18) et une surface de guidage (60) commençant en amont du ou des tambour(s) de coupe, qui vient vers l'arrière s'ajuster au-dessus du ou des tambour(s) en se rapprochant des moyens d'entraînement, cette surface comprenant au moins une fente longitudinale (62) partant en amont du ou des tambour(s) de coupe, comportant une largeur laissant passer les radicelles (24) et retenant au-dessus les bulbes (20).

2. Machine automatique selon la revendication 1, **caractérisée en ce que** chaque tambour de coupe (68) est rotatif suivant un axe transversal et comporte des petits disques (52) recevant dans l'espace entre eux des couteaux de coupe (56) parallèles à l'axe transversal, le rebord coupant de ces couteaux étant ajusté sensiblement sur le diamètre extérieur de ces disques.

3. Machine automatique selon la revendication 2, **caractérisée en ce que** les fentes longitudinales de la surface de guidage (62) sont positionnées au-dessus des espaces entre les petits disques (52).

4. Machine automatique selon la revendication 3, **caractérisée en ce que** la surface de guidage (60) comporte sous chaque moyen d'entraînement longitudinal (18) trois fentes longitudinales (62) séparées par des fines lamelles (66).

5. Machine automatique selon l'une des revendications 2 à 4, **caractérisée en ce que** chaque tambour de coupe (68) est encadré latéralement par deux grands disques (50) comprenant un diamètre extérieur qui est supérieur à ce tambour.

6. Machine automatique selon la revendication 5, **caractérisée en ce que** chaque fente extérieure (62) d'un ensemble de fentes pour un même tambour de coupe (68), comporte sur son côté extérieur une échancrure (64) laissant passer un grand disque (50).

7. Machine automatique selon l'une des revendications 2 à 6, **caractérisée en ce qu'**elle comporte des cylindres (54) remplissant l'espace axial entre les tambours de coupe (68), qui présentent sensiblement le même diamètre que ces tambours.

8. Machine automatique selon l'une des revendications 2 à 7, **caractérisée en ce que** l'arbre transversal (40) est directement lié à l'arbre d'un moteur (42) l'entraînant, pour tourner à la même vitesse que lui.

9. Machine automatique selon l'une des revendications 2 à 8, **caractérisée en ce qu'**elle comporte trois tambours de coupe (68) disposés sur l'arbre transversal (40), recevant chacun une rangée de plantes.

10. Machine automatique selon l'une des revendications précédentes, **caractérisée en ce que** la surface de guidage (60) est formée dans une tôle découpée, qui est cintrée pour présenter une section transversale constante formant une courbure régulière s'abaissant vers l'avant.

11. Machine automatique selon l'une des revendications précédentes, **caractérisée en ce qu'**elle comporte une lame tendue (32) formant une boucle fermée, comprenant une partie droite horizontale passant au-dessus de l'ensemble des moyens d'entraînement (18), prévue pour couper les feuilles (22) des plantes.

12. Machine automatique selon l'une des revendications précédentes, **caractérisée en ce qu'**elle comporte au moins deux courroies fermées (18) présentant deux longueurs parallèles formant un moyen d'entraînement, entre lesquelles une rangée de bulbes (20) est serrée et entraînée longitudinalement vers la direction arrière.

13. Procédé de coupe de radicelles (24) avec une machine automatique, en dessous de bulbes (20) formant des racines de plantes, **caractérisé en ce que** les bulbes (20) sont introduits en avant d'un moyen d'entraînement longitudinal (18) vers une direction arrière, les radicelles étant tournées vers le bas, puis les radicelles sont insérées dans des fentes longitudinales (62) d'une surface de guidage (60) commençant en amont d'un tambour de coupe (68) disposé en-dessous du moyen d'entraînement (18), le bulbe (20) glissant au-dessus de cette surface, puis les radicelles sont coupées par le tambour de coupe en dessous de cette surface.

## Patentansprüche

1. Automatische Maschine zum Abschneiden von Feinwurzeln (24) unterhalb von Zwiebeln (20), die die Wurzel einer Pflanze bilden, wobei diese Maschine wenigstens ein in Längsrichtung nach hinten verlaufendes Fördermittel (18) für eine Reihe von Zwiebeln aufweist, wobei die Feinwurzeln nach unten gedreht werden, **dadurch gekennzeichnet, dass** diese wenigstens eine Schneidetrommel (68) aufweist, die unterhalb der Fördermittel (18) angeordnet ist, und eine Führungsfläche (60) aufweist, die vor der oder den Schneidetrommel(n) beginnt und sich nach hinten oberhalb der Schneidetrommel(n) einpasst, während sie sich den Fördermitteln annähert, wobei diese Oberfläche wenigstens einen Längsschlitz (62) aufweist, der vor der oder den Schneidetrommel(n) beginnt und eine Breite aufweist, die die Feinwurzeln (24) hindurchtreten lässt und die Zwiebeln (20) darüber hält.

2. Automatische Maschine nach Anspruch 1, **dadurch gekennzeichnet, dass** jede Schneidetrommel (68) um eine Querachse drehbar ist und kleine Scheiben (52) aufweist, die im Zwischenraum parallel zur Querachse ausgerichtete Schneidemesser (56) aufweisen, wobei die schneidenden Ränder der Messer im Wesentlichen auf den Außendurchmesser dieser Scheiben eingestellt sind.

3. Automatische Maschine nach Anspruch 2, **dadurch gekennzeichnet, dass** die Längsschlitze der Führungsfläche (62) oberhalb der Zwischenräume zwischen den kleinen Scheiben (52) angeordnet sind.

4. Automatische Maschine nach Anspruch 3, **dadurch gekennzeichnet, dass** die Führungsfläche (60) unter jedem der in Längsrichtung verlaufenden Fördermitteln (18) drei Längsschlitze (62) aufweist, die durch dünne Lamellen (66) getrennt sind.

5. Automatische Maschine nach einem der Ansprüche 2 bis 4, **dadurch gekennzeichnet, dass** jede Schneidetrommel (68) in seitliche Richtung von zwei großen Scheiben (50) eingefasst ist, die einen größeren Außendurchmesser als diese Trommel aufweisen.

6. Automatische Maschine nach Anspruch 5, **dadurch gekennzeichnet, dass** jeder äußere Schlitz (62) einer Gruppe von Schlitzen für die gleiche Schneidetrommel (68) auf seiner Außenseite eine Einbuchtung (64) aufweist, die eine große Scheibe (50) hindurchtreten lässt.

7. Automatische Maschine nach einem der Ansprüche 2 bis 6, **dadurch gekennzeichnet, dass** diese Zylinder (54) aufweist, die den axialen Raum zwischen den Schneidetrommeln (68) füllen und die im Wesentlichen den gleichen Durchmesser wie diese Trommeln aufweisen.

8. Automatische Maschine nach einem der Ansprüche 2 bis 7, **dadurch gekennzeichnet, dass** die Querwelle (40) unmittelbar mit der Welle eines diese antreibenden Motors (42) verbunden ist, um sich mit der gleichen Geschwindigkeit wie diese zu drehen.

9. Automatische Maschine nach einem der Ansprüche 2 bis 8, **dadurch gekennzeichnet, dass** diese drei Schneidetrommeln (68) aufweist, die auf der Querwelle (40) angeordnet sind, um jeweils eine Reihe von Pflanzen aufzunehmen.

10. Automatische Maschine nach einem der vorhergehenden Ansprüche, **dadurch gekennzeichnet, dass** die Führungsfläche (60) aus einem ausgeschnittenen Blech geformt ist, das gebogen wurde, um einen konstanten Querschnitt zu bilden, der eine regelmäßige Wölbung bildet und sich nach vorne hin absenkt.

11. Automatische Maschine nach einem der vorhergehenden Ansprüche, **dadurch gekennzeichnet, dass** diese ein Schneideband (32) aufweist, das eine geschlossene Schleife bildet und einen geraden horizontalen Abschnitt aufweist, der oberhalb der Gruppe der Fördermittel (18) verläuft und zum Schneiden der Pflanzenblätter (22) vorgesehen ist.

12. Automatische Maschine nach einem der vorhergehenden Ansprüche, **dadurch gekennzeichnet, dass** diese wenigstens zwei geschlossene Förderbänder (18) aufweist, die zwei parallele Längsseiten umfassen, die ein Fördermittel bilden und zwischen denen eine Reihe von Zwiebeln (20) eingeklemmt ist und in Längsrichtung nach hinten befördert wird.

13. Verfahren zum Schneiden von Feinwurzeln (24) mit einer automatischen Maschine, wobei sich die Feinwurzeln (24) unterhalb von Zwiebeln (20) befinden, die die Wurzeln der Pflanzen bilden, **dadurch gekennzeichnet, dass** die Zwiebeln (20) auf der Vorderseite eines sich in Längsrichtung nach hinten erstreckenden Fördermittels (18) eingeführt werden, wobei die Feinwurzeln nach unten gedreht werden, und dann in Längsschlitze (62) einer Führungsfläche (60) eingeführt werden, die vor einer Schneidetrommel (68) beginnen, die unterhalb des Fördermittels (18) angeordnet ist, wobei die Zwiebel (20) über diese Oberfläche gleitet und die Feinwurzeln durch die Schneidetrommel unterhalb dieser Oberfläche abgeschnitten werden.

## Claims

1. An automatic machine for cutting rootlets (24) under bulbs (20) forming the root of a plant, this machine comprising at least one means (18) for the longitudinal driving of a row of bulbs in a rearward direction, the rootlets being turned downwards, **characterised in that** it comprises at least one cutting drum (68) disposed under the driving means (18) and a guide surface (60) commencing upstream of the cutting drum or drums, which is rearwardly fitted above the drum or drums close to the driving means, this surface comprising at least one longitudinal slot (62) starting upstream of the cutting drum or drums, comprising a width allowing the rootlets (24) to pass and keeping the bulbs (20) above.

2. An automatic machine according to claim 1, **characterised in that** each cutting drum (68) is rotatable on a transverse axis and comprises small discs (52) receiving, in the space between them, cutting blades (56) parallel to the transverse axis, the cutting edge of these blades fitting substantially on the outside diameter of these discs.

3. An automatic machine according to claim 2, **characterised in that** the longitudinal slots on the guide surface (62) are positioned above the spaces between the small discs (52).

4. An automatic machine according to claim 3, **characterised in that** the guide surface (60) comprises, under each longitudinal drive means (18), three longitudinal slots (62) separated by thin blades (66).

5. An automatic machine according to any of claims 2 to 4, **characterised in that** each cutting drum (68) is framed laterally by two large discs (50) comprising an outside diameter that is greater than this drum.

6. An automatic machine according to claim 5, **characterised in that** each outside slot (62) in a set of slots for the same cutting drum (68) comprises, on its external side, a cutout (64) allowing a large disc (50) to pass.

7. An automatic machine according to any of claims 2 to 6, **characterised in that** it comprises cylinders (54) filling the axial space between the cutting drums (68), which have substantially the same diameter as these drums.

8. An automatic machine according to any of claims 2 to 7, **characterised in that** the transverse shaft (40) is directly connected to the shaft of a motor (42) driving it, so as to turn at the same speed as it.

9. An automatic machine according to any of claims 2 to 8, **characterised in that** it comprises three cutting drums (68) disposed on the transverse shaft (40), each receiving a row of plants.

10. An automatic machine according to any of the preceding claims, **characterised in that** the guide surface (60) is formed from a cropped metal sheet that is curved so as to have a constant cross section forming a regular curvature dropping towards the front.

11. An automatic machine according to any of the preceding claims, **characterised in that** it comprises a tensioned blade (32) forming a closed loop, comprising a horizontal straight part passing above all the drive means (18), designed to cut the leaves (22) of the plants.

12. An automatic machine according to any of the preceding claims, **characterised in that** it comprises at least two closed belts (18) having two parallel lengths forming a drive means, between which a row of bulbs (20) is gripped and driven longitudinally towards the rearward direction.

13. A method for cutting rootlets (24) with an automatic machine, under bulbs (20) forming roots of plants, **characterised in that** the bulbs (20) are introduced in front of a means (18) for longitudinal driving in a rearward direction, the rootlets being turned downwards, and then the rootlets are inserted in longitudinal slots (62) in a guide surface (60) commencing upstream of a cutting drum (68) disposed under the drive means (18), the bulb (20) sliding above this surface, and then the rootlets are cut by the cutting drum below this surface.
